# EUROPÄISCHE PATENTSCHRIFT

(11) **EP 1 273 354 B1**
(45) Veröffentlichungstag und Bekanntmachung des Hinweises auf die Patenterteilung: **24.12.2008**
(21) Anmeldenummer: 02013681.8
(22) Anmeldetag: 01.07.2002
(51) Int. Cl.: B05B 7/14

(54) **Pulverfördervorrichtung und Verfahren zur Pulverauftragung auf einen Träger**
Powder feeding device and method for applying powder onto a substrate
Dispositif d'alimentation en poudre et procédé d'application de poudre sur un substrat

(30) Priorität: 02.07.2001 DE 10134498
(43) Veröffentlichungstag der Anmeldung: 08.01.2003
(73) Patentinhaber: Deutsches Zentrum für Luft- und Raumfahrt e.V., 51147 Köln (DE)
(72) Erfinder: Kaz, Till, 70186 Stuttgart (DE); Schneider, Armin, 70567 Stuttgart (DE)
(74) Vertreter: Hoeger, Stellrecht & Partner Patentanwälte

(56) Entgegenhaltungen:
- DE-A1- 4 039 061
- FR-A- 2 163 182
- US-A- 4 688 518
- US-A- 4 886 011
- US-A- 5 603 566

## Beschreibung

Die Erfindung betrifft eine Pulverfördervorrichtung mit einem Aufnahmebehälter für Pulver, welcher einen Abfuhranschluß zur Abfuhr von Pulver aus dem Aufnahmebehälter in einem Gasstrom aufweist, und mit einer Gasstrom-Einkopplungsvorrichtung für den Aufnahmebehälter, durch welche ein erster Gasstrom in den Aufnahmebehälter einkoppelbar ist, durch den eine Pulverwolke in dem Aufnahmebehälter bildbar ist, und wobei ein zweiter Gasstrom in den Aufnahmebehälter zur Zerstäubung der Pulverwolke einkoppelbar ist.

Derartige Pulverfördervorrichtungen sind beispielsweise aus der DE 197 57 492 A1 und der FR 2 163 182 bekannt.

Aus der US 5,603,566 A ist eine Pulverfördervorrichtung mit Interner Luftunterstützung bekannt. Diese umfasst eine Pulverkammer und Luftbereitstellungsmittel, um komprimierte Luft der Pulverkammer bereitzustellen. Innerhalb der Pulverkammer ist eine Röhre rotierbar angeordnet, welche einen Hohlraum hat, der in Verbindung mit den Luftbereitstellungsmitteln steht und eine Mehrzahl von Luftauslässen längs der Röhre in Verbindung mit den Hohlraum aufweist. Es ist ferner ein Antrieb zur Rotation der Röhre vorgesehen.

Davon ausgehend liegt der Erfindung die Aufgabe zugrunde, eine Pulverfördervorrichtung zu schaffen, mit der sich unterschiedlichste Arten von Pulver unter Verhinderung einer Agglomeration des Pulvers fördern lassen.

Diese Aufgabe wird bei der eingangs genannten Pulverfördervorrichtung erfindungsgemäß dadurch gelöst, daß über den Abfuhranschluß mittels eines Schöpfrohres Pulver aus der Pulverwolke abführbar ist und daß die Position einer Eintrittsöffnung des Schöpfrohrs im Aufnahmebehälter einstellbar ist.

Durch den ersten Gasstrom wird das Pulver in einem Aufnahmeraum des Aufnahmebehälters in der Schwebe gehalten und durch den zweiten Gasstrom wird die dabei gebildete Pulverwolke verwirbelt, das heißt zerstäubt. Auf diese Weise wird eine Agglomeration des Pulvers in dem Aufnahmeraum verhindert. Je nach Einstellung der Gasströme und insbesondere ihres Verhältnisses zueinander lassen sich verschiedenste Arten von Pulvern fördern; es lassen sich neben leichten Pulvern schwere Metallpulver wie beispielsweise ungeträgerte Katalysatorpulver fördern. Insbesondere lassen sich auch Pulver mit Nanopartikeln fördern.

Durch die Abführung des Pulvers aus dem Aufnahmeraum mittels des Schöpfrohres, wobei das Pulver mittels eines Gasstromes ausgetragen wird, der durch die Überlagerung des ersten Gasstromes und des zweiten Gasstromes zustandekommt, läßt sich dann das Pulver agglomerationsfrei fördern und so beispielsweise auf einen Träger aufsprühen. Durch Einstellung der Position einer Eintrittsöffnung des Schöpfrohres relativ zu den Einkopplungsbereichen der Gasströme ist ein weiterer Parameter vorhanden, über den die Pulverförderung abhängig vom Pulvermaterial optimierbar ist.

Die Position einer Eintrittsöffnung des Schöpfrohres im Aufnahmebehälter ist einstellbar und insbesondere in situ einstellbar. Es läßt sich dann durch gezielte Einstellung dieser Position ein optimales Förderungsergebnis und damit Austragsergebnis erhalten. Auf diese Weise läßt sich eine homogene Förderung erreichen, so daß sich beispielsweise Sprühschichten mit hoher Reproduzierbarkeit herstellen lassen, und zwar für verschiedenartigste Pulversorten.

Um das Pulver in der Schwebe zu halten, das heißt eine Pulverwolke zu bilden, ist dabei insbesondere der erste Gasstrom im Aufnahmebehälter im wesentlichen entgegen der Schwerkraftrichtung gerichtet eingeleitet.

Ganz besonders vorteilhaft ist es, wenn zur Einleitung des ersten Gasstromes einen Gasstrom durch eine Pulverbarriere geführt ist, welche Gasstrom-durchlässig aber undurchlässig für Pulverpartikel ist. Auf diese Weise läßt sich der erste Gasstrom großflächig in den Aufnahmeraum des Aufnahmebehälters einkoppeln, ohne daß dadurch Pulver aus dem Aufnahmebehälter herausfallen kann. Beispielsweise ist die Pulverbarriere dabei durch eine Sinterplatte gebildet, welche entsprechend feine Poren aufweist, die zwar gasdurchlässig aber nicht pulverdurchlässig sind. Die Sinterplatte läßt sich dabei insbesondere so herstellen, daß auch feinste Pulverpartikel nicht durchfallen können.

Günstigerweise bildet dann die Pulverbarriere eine bezogen auf die Schwerkraftrichtung untere Begrenzung eines Aufnahmeraums des Aufnahmebehälters, so daß durch den Gasstrom durch die Pulverbarriere hindurch das Pulver in dem Aufnahmeraum in der Schwebe haltbar ist.

Weiterhin ist es vorgesehen, daß der zweite Gasstrom in den Aufnahmebehälter bezogen auf die Schwerkraftrichtung oberhalb des ersten Gasstromes eingekoppelt ist, um so die in der Schwebe gehaltene Pulverwolke zu verwirbeln, wobei über den aus dem ersten Gasstrom und dem zweiten Gasstrom resultierenden Gasstrom Pulver über das Schöpfrohr ausgetragen wird.

Es können grundsätzlich Winkelabweichungen zur exakten kollinearen Ausrichtung vorgesehen werden, die bis zu 50° betragen. Zur Verwirbelung und damit Zerstäubung der Pulverwolke und damit zur Verhinderung von Agglomeration von Pulver bei der Pulverförderung kann es günstig sein, wenn der zweite Gasstrom im Aufnahmebehälter im wesentlichen in Gegenrichtung zum ersten Gasstrom gerichtet ist.

Bei einer konstruktiv günstigen Ausführungsform wird der zweite Gasstrom über ein Rohr eingekoppelt, welches mit einer oder mehreren Öffnungen versehen ist. Auf diese Weise läßt sich der Gasstrom einfach einkoppeln, wobei die Verminderung des Volumens des Aufnahmeraums über die entsprechende Einkopplungsvorrichtung minimiert ist. Durch entsprechende Anbringung der Öffnungen läßt sich die gewünschte Richtung des zweiten Gasstromes einstellen.

Insbesondere ist es vorteilhaft, wenn die Öffnung oder Öffnungen bezogen auf eine Achse des Aufnahmebehälters im wesentlichen symmetrisch angeordnet sind. Dadurch läßt sich gewährleisten, insbesondere im Zusammenhang mit einer symmetrisch ausgebildeten Pulverbarriere, daß sich in dem Aufnahmeraum bezüglich der Strömungsverhältnisse keine Totpunkte bilden können, in denen es zu einer Pulververbackung kommen könnte.

Um eine gute Verwirbelung der Pulverwolke zu erhalten, sind vorteilhafterweise die Öffnung oder Öffnungen bezogen auf die Schwerkraftrichtung nach unten gerichtet.

Um Pulver von dort austragen zu können, wo es am effektivsten homogenisiert ist, nämlich in der Verwirbelungszone, ist vorteilhafterweise eine Eintrittsöffnung des Schöpfrohres bezogen auf die Schwerkraftrichtung oberhalb der Einkopplung des zweiten Gasstromes positioniert.

Bezüglich der Anpassung der erfindungsgemäßen Pulverförderungsvorrichtung an ein spezielles eingesetztes Pulver kann günstigerweise auch der Durchmesser der Eintrittsöffnung variiert werden, beispielsweise über einen entsprechenden Mündungsaufsatz, welcher einen gewünschten Öffnungsdurchmesser hat.

Insbesondere ist die Position der Eintrittsöffnung in vertikaler Richtung bezogen auf die Schwerkraftrichtung einstellbar, das heißt das Schöpfrohr kann nach oben oder unten verfahren werden.

Es kann vorgesehen sein, daß die Eintrittsöffnung im Aufnahmebehälter so positioniert ist, daß sie im wesentlichen bei einer Achse des Aufnahmebehälters angeordnet ist, das heißt auf einer Symmetrieachse liegt, um so für eine effektive Austragung über den Gasstrom aus dem Aufnahmebehälter zu sorgen.

Um Pulveransammlungen im Aufnahmebehälter zu verhindern, weist dieser vorteilhafterweise innenpolierte Wände auf. Weiterhin ist es günstig, wenn er einen kreisförmigen Querschnitt aufweist, so daß keine Ecken und Kanten in dem Aufnahmeraum für das Pulver vorhanden sind.

Günstig ist es, wenn der Volumenstrom des ersten Gasstromes einstellbar ist, der Volumenstrom des zweiten Gasstromes einstellbar ist und insbesondere das Verhältnis der beiden Volumenströme einstellbar ist. Auf diese Weise läßt sich eine optimale Homogenisierung und Austragung, das heißt Pulverförderung, erreichen, wobei verschiedenartigste Pulver eingesetzt werden können.

In einem Anwendungsfall ist an das Schöpfrohr eine Düse angeschlossen, um so über die erfindungsgemäße Pulverfördervorrichtung eine trockene Sprühschicht auf einen Träger aufbringen zu können.

Der erfindungsgemäßen Pulverfördervorrichtung wird mechanisch homogenisiertes Pulver bereitgestellt, das heißt der Aufnahmebehälter nimmt homogenisiertes Pulver auf. Die Pulverfördervorrichtung selber führt keine mechanische Homogenisierung durch, sondern eine Homogenisierung bezüglich der Austragung, das heißt verhindert eine Agglomeration von bereits mechanisch homogenisiertem Pulver.

Bei einer Variante einer Ausführungsform ist dem Aufnahmebehälter Pulver von einem Pulvervorrat zugeführt und insbesondere kontinuierlich zugeführt, um beispielsweise kontinuierlich Pulver auf einen Träger aufbringen zu können.

Vorteilhafterweise läßt sich die erfindungsgemäße Pulverfördervorrichtung als Pulverauftragungsvorrichtung von Pulver auf einen Träger verwenden, wobei dann insbesondere das Schöpfrohr an eine Flachdüse angeschlossen ist.

Eine Mahlvorrichtung stellt dabei das bezüglich der Partikelgröße homogenisierte Pulver bereit und die Pulverfördervorrichtung sorgt für einen homogenen (gleichmäßigen) Auftrag. Insbesondere lassen sich über sie trockene Sprühbeschichtungen auf Trägern mit hoher Reproduzierbarkeit durchführen.

Die Erfindung betrifft ferner ein Verfahren zur Pulverauftragung auf einen Träger.

Es liegt dabei die Aufgabe zugrunde, ein Verfahren bereitzustellen, mit dem sich Pulver auf einen Träger auftragen läßt, wobei die Auftragung des Pulvers homogen ist und eine hohe Reproduzierbarkeit aufweist.

Diese Aufgabe wird erfindungsgemäß dadurch gelöst, daß homogenisiertes Pulver einer Pulverfördervorrichtung zugeführt wird, aus welcher Pulver über einen Gasstrom mittels eines Schöpfrohrs ausgetragen wird, wobei in der Pulverfördervorrichtung über einen ersten Gasstrom eine schwebende Pulverwolke gebildet wird, über einen zweiten Gasstrom die Pulverwolke zerstäubt wird und wobei eine Eintrittsöffnung des Schöpfrohres, deren Position einstellbar ist, in die zerstäubte Pulverwolke zur Pulveraustragung gerichtet wird.

Das erfindungsgemäße Verfahren weist die bereits im Zusammenhang mit der erfindungsgemäßen Pulverfördervorrichtung beschriebenen Vorteile auf. Insbesondere lassen sich dabei dünne homogene Schichten mit hoher Reproduzierbarkeit herstellen.

Beispielsweise im Zusammenhang mit der Herstellung von elektrochemischen Schichten lassen sich auch ungeträgerte Katalysatoren (Edelmetalle ohne Kohlenstoffpartikel als Träger) als Pulverbestandteil einsetzen, da entsprechend durch Einstellung der Parameter auch solche relativ schweren Pulverpartikel förderbar sind, ohne daß eine Agglomeration auftritt.

Weitere vorteilhafte Ausgestaltungen des erfindungsgemäßen Verfahrens wurden bereits im Zusammenhang mit der erfindungsgemäßen Pulverfördervorrichtung beschrieben sowie ihre Vorteile diskutiert.

Die nachfolgende Beschreibung bevorzugter Ausführungsformen dient im Zusammenhang mit der Zeichnung der näheren Erläuterung der Erfindung. Es zeigen:
- Fig. 1: eine schematische Darstellung eines erfindungsgemäßen Pulverförderers und
- Fig. 2: eine schematische Darstellung einer Pulverauftragungsvorrichtung, bei welcher homogenisiertes Pulver von einer Mahlvorrichtung einer Pulverfördervorrichtung zugeführt und über diesen auf einen Träger aufgetragen wird.

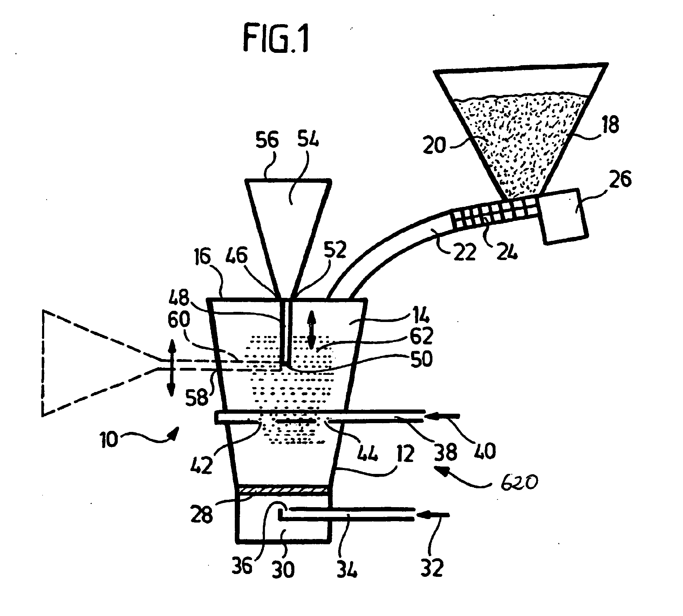

Bei einem Ausführungsbeispiel einer erfindungsgemäßen Pulverfördervorrichtung, welche in Figur 1 als Ganzes mit 10 bezeichnet ist, ist ein Aufnahmebehälter 12 vorgesehen, in dem ein Aufnahmeraum 14 gebildet ist. Der Aufnahmeraum 14 weist dabei vorzugsweise eine Symmetrieachse auf und bezogen auf diese Symmetrieachse einen runden Querschnitt. Beispielsweise ist der Aufnahmeraum 14 dann zylindrisch oder konisch ausgebildet. Begrenzungswände des Aufnahmeraums 14 sind innenpoliert.

An einem bezogen auf die Schwerkraftrichtung oberen Ende des Aufnahmebehälters 12 ist zum Abschluß des Aufnahmeraums 14 ein Behälterdeckel 16 angeordnet. Dieser Behälterdeckel 16 kann insbesondere geöffnet werden, um zu förderndes Pulver in den Aufnahmeraum 14 einzufüllen, sofern keine kontinuierliche Pulverzufuhr vorgesehen ist.

Bei einer Variante einer Ausführungsform wird von einem Pulvervorrat 18, welcher beispielsweise trichterförmig ausgestaltet ist und der homogenisiertes Pulver 20 aufnimmt, über eine Leitung 22, welche beispielsweise über den Behälterdeckel 16 in den Aufnahmeraum 14 mündet, Pulver bereitgestellt. Insbesondere kann dabei dieses Pulver 20 kontinuierlich bereitgestellt werden. Das Pulver 20 ist dabei insbesondere durch Nanopartikel mit einer Partikelgröße in der Größenordnung von 30 mm oder kleiner gebildet.

Zur Förderung des Pulvers in der Leitung 22 ist beispielsweise eine Schnecke 24 vorgesehen, welche über einen Motor 26 angetrieben ist.

An seinem bezogen auf die Schwerkraft Richtung unteren Ende ist der Aufnahmeraum 14 durch eine Pulverbarriere 28 abgeschlossen. Diese Pulverbarriere verhindert, daß Pulver aus dem Aufnahmeraum 14 durchfallen kann, ist jedoch im wesentlichen über ihren gesamten Querschnitt Gasstromdurchlässig. Beispielsweise ist die Pulverbarriere 28 durch eine Sinterplatte gebildet, die undurchlässig auch für feine Pulverpartikel ist, jedoch nicht für Gasstrom.

Unterhalb der Pulverbarriere 28 ist ein Verteilungsraum 30 für einen ersten Gasstrom 32 angeordnet. Der erste Gasstrom 32 wird dabei über eine Leitung 34 in den Verteilungsraum 30 geführt, wobei die Leitung 34 eine Mündungsöffnung 36 aufweist, aus der der erste Gasstrom in den Verteilungsstrom 30 eintreten kann und über die Pulverbarriere 28 dann in den Aufnahmeraum 14, wobei diese Mündungsöffnung 36 bezogen auf die Schwerkraftrichtung nach oben gerichtet ist. Die Mündungsöffnung 36 ist dabei insbesondere an der Achse des Aufnahmeraums 14 positioniert, so daß eine symmetrische Gasstromzufuhr zu dem Aufnahmeraum 14 gewährleistet ist.

Über eine Leitung 38 läßt sich ein zweiter Gasstrom 40 in den Aufnahmeraum 14 einkoppeln, wobei diese Leitung 38 oberhalb der Leitung 34, bezogen auf die Schwerkraftrichtung, in den Aufnahmeraum 14 geführt ist. Diese Leitung 38 weist innerhalb des Aufnahmeraums 14 angeordnete Öffnungen 42, 44 auf, welche in Richtung der Pulverbarriere 28 gerichtet sind, so daß der zweite Gasstrom 40 beim Eintritt in den Aufnahmeraum 14 im wesentlichen dem ersten Gasstrom 32 bei dessen Eintritt aus der Pulverbarriere 28 in den Aufnahmeraum 14 entgegengerichtet ist. Die Öffnungen 42, 44 sind dabei so angeordnet, daß sie im wesentlichen symmetrisch zu einer Achse des Aufnahmeraums 14 sind.

Der Aufnahmebehälter 12 ist mit einem Abfuhranschluß 46 versehen, über den Pulver aus dem Aufnahmeraum 14 abführbar ist, um beispielsweise einen Träger zu beschichten.

Bei einer in durchgezogenen Linien gezeigten Variante einer Ausführungsform ist der Abfuhranschluß 46 in dem Behälterdeckel 16 angeordnet und durch eine Öffnung gebildet. Durch den Abfuhranschluß 46 ist ein Schöpfrohr 48 in den Aufnahmeraum 14 geführt, wobei dieses Schöpfrohr eine Eintrittsöffnung 50 für Pulver aufweist, über die Pulver aus dem Aufnahmeraum 14 abführbar ist. Beispielsweise ist dazu das der Eintrittsöffnung 50 abgewandte Ende 52 an eine Flachdüse 54 gekoppelt, wobei dann über ein Austrittsende 56 dieser Flachdüse 54 ein Träger mit Pulver aus dem Aufnahmeraum 14 besprühbar ist.

Die Eintrittsöffnung 50 ist insbesondere im Bereich der Achse des Aufnahmeraums 14 positioniert, das heißt weist im wesentlichen den gleichen Abstand zu den umgebenden Wänden des Aufnahmebehälters 12 auf.

Es ist vorgesehen, daß die Position der Eintrittsöffnung 50 relativ zu der Pulverbarriere 28 variierbar ist, das heißt einstellbar ist, so daß die vertikale Position der Eintrittsöffnung 50 im Aufnahmeraum 14 einstellbar ist.

Es kann weiterhin vorgesehen sein, daß der Öffnungsdurchmesser der Eintrittsöffnung 50 selber einstellbar ist, beispielsweise über einen entsprechenden Aufsatz, der auf dem Schöpfrohr 48 positionierbar ist.

Bei einer weiteren Variante einer Ausführungsform, welche in Figur 1 in durchbrochenen Linien gezeigt ist, ist ein Abfuhranschluß 58 seitlich an einer Wand des Aufnahmebehälters 12 angeordnet und entsprechend ist ein Schöpfrohr 60 über diesen Abfuhranschluß 58 seitlich in den Aufnahmeraum 14 geführt. Es kann auch hier vorgesehen sein, daß die vertikale Höhe des Schöpfrohrs 60 einstellbar ist, indem beispielsweise über einen Faltenbalg oder dergleichen und eine Positioniervorrichtung dieses Schöpfrohr 60 höhenverschiebbar ist.

Die erfindungsgemäße Pulverförderungsvorrichtung funktioniert wie folgt:

Der Aufnahmeraum 14 wird mit mechanisch homogenisiertem Pulver befüllt, bei dem die Partikelgröße mit hoher statistischer Häufigkeit bei einem Mittelwert liegt. Dies kann entweder dadurch erfolgen, daß eine Pulvercharge über den Behälterdeckel 16 in den Aufnahmeraum 14 eingefüllt wird, oder daß Pulver aus dem Pulvervorrat 18 über die Leitung 22 in den Aufnahmeraum 14 insbesondere kontinuierlich gefördert wird.

Über die Leitung 34 und die Pulverbarriere 28 wird der erste Gasstrom 32, bei dem es sich insbesondere um einen Inertgasstrom wie einen Stickstoffgasstrom oder Argongasstrom handelt, in den Aufnahmeraum 14 eingekoppelt, wobei er bei der Einkopplung im wesentlichen entgegen der Schwerkraftrichtung gerichtet ist. Dieser erste Gasstrom 32 hält dann das Pulver in einer Pulverwolke 62 im Aufnahmeraum 14 in Schwebe und sorgt dafür, daß Pulver über die Eintrittsöffnung 50 durch das Schöpfrohr 48 in die Flachdüse 54 ausgetragen wird.

Der zweite Gasstrom, welcher wiederum ein Inertgasstrom ist und insbesondere durch das gleiche Gas gebildet ist wie der erste Gasstrom, tritt über die Leitung 38 und die Öffnungen 42, 44 in den Aufnahmeraum 14 ein und ist dabei beim Eintritt im wesentlichen dem ersten Gasstrom 32 entgegengerichtet. Er bewirkt dadurch eine Verwirbelung der Pulverwolke 62, das heißt eine Zerstäubung der Pulverwolke 62. Dadurch wird die Agglomeration und Kogglomeration von Pulverpartikeln im Pulver 20 verhindert, so daß sich über die Pulverfördervorrichtung 10 auch feinstes Pulver auf einen Träger aufbringen läßt, so daß sich Schichtdicken beispielsweise kleiner als 40 µm herstellen lassen und insbesondere sich Schichten mit einer Dicke von größenordnungsmäßig 5 µm herstellen lassen. Das zerkleinerte, homogenisierte Pulver wird dabei dem Aufnahmeraum 14 bereitgestellt, das heißt in diesem findet keine mechanische Homogenisierung bezüglich der Partikelgröße statt, sondern eine homogene Austragung aus diesem.

Durch die als Ganzes mit 620 bezeichnete Gasstrom-Einkopplungsvorrichtung, welche die Leitung 38, die Leitung 34 und die Pulverbarriere 28 umfaßt, lassen sich die beiden Gasströme 32 und 40 in einem bestimmten Volumenstrom in den Aufnahmeraum 14 einkoppeln, insbesondere in einem bestimmten Verhältnis zueinander einkoppeln. Beispielsweise ist es dazu vorgesehen, daß von einem Gasvorrat über entsprechende Drosselventile der gewünschte Volumengasstrom jeweils in der Leitung 38 und der Leitung 34 erzeugt wird. Je nach Pulverzusammensetzung und Pulvergröße werden die Gasströme so eingestellt, daß sich das Pulver optimal austragen läßt. Durch die Einstellbarkeit der Höhe der Eintrittsöffnung 50 des Schöpfrohrs 48 über der Pulverbarriere 28 ergibt sich ein weiterer Parameter, mit dem sich die erfindungsgemäße Pulverfördervorrichtung 10 an das zu verarbeitende Pulver anpassen läßt. Mit der erfindungsgemäßen Vorrichtung läßt sich sicherstellen, daß unter Verhinderung von Agglomeration und Kogglomeration des Pulvers in dem Aufnahmeraum 14 über einen entsprechenden Gasstrom homogenisiertes Pulver aus dem Aufnahmeraum 14 durch das Schöpfrohr 18 hindurch ausgetragen wird.

Es ergibt sich dabei im wesentlichen unabhängig von der Art des Pulvermaterials eine gute Homogenisierung und eine gute Verarbeitbarkeit, die insbesondere durch die Einstellbarkeit der Höhe der Eintrittsöffnung 50 über der Pulverbarriere 28 gewährleistet ist. Es lassen sich so trockene Schichten aufsprühen, die eine hohe Reproduzierbarkeit aufweisen. Insbesondere ist es über die erfindungsgemäße Pulverfördervorrichtung 10 möglich, auf einen Träger auch ungeträgerte Katalysatoren (Edelmetalle ohne Kohlenstoffpartikel als Träger) auf ein Substrat aufzusprühen.

Über die erfindungsgemäße Pulverfördervorrichtung lassen sich beispielsweise elektrochemische Schichten trocken aufsprühen, wobei eine dünne Schicht erreichbar ist. Weiterhin können als Pulver auch geträgerte Katalysatoren eingesetzt werden (Edelmetalle auf Kohlenstoffpartikeln) oder auch Elektrolytpulver.

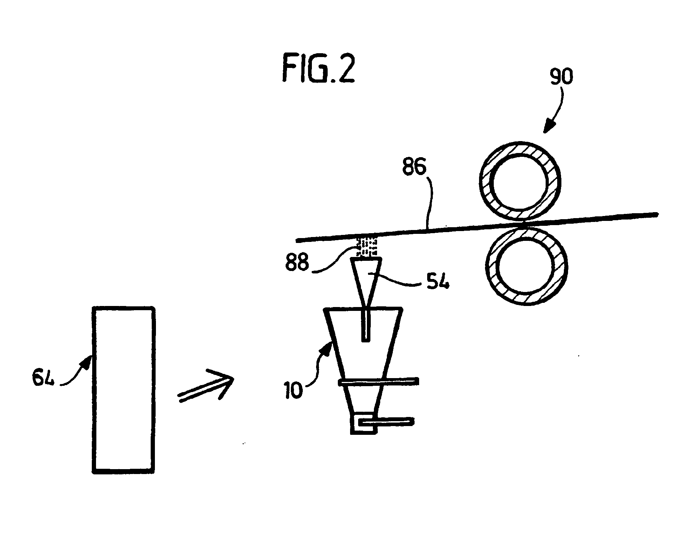

Zur Homogenisierung ist eine Mahlvorrichtung 64 vorgesehen (Figur 2).

Erfindungsgemäß wird, wie in Figur 2 schematisch gezeigt, ein Träger 86 mit einem Pulver 88 besprüht, um auf dem Träger 86 eine Schicht zu bilden, welches über die Düse 54 aus der Pulverfördervorrichtung 10 ausgetragen wird. Das homogenisierte Pulver aus der Pulverfördervorrichtung 10 wiederum stammt von der Mahlvorrichtung 64, die gewährleistet, daß auch sehr feines Pulver (Nanopartikel-Pulver) immer noch einen hohen Homogenisierungsgrad aufweisen.

Das aufgesprühte Pulver 80 läßt sich beispielsweise über ein Walzenpaar 90 auf den Träger noch aufwalzen oder über eine Presse fixieren.

Auf diese Weise lassen sich beispielsweise elektrochemische Schichten für Wasserstoff-Membran-Brennstoffzellen, Direkt-Methanol-Membran-Brennstoffzellen oder für Gasdiffusionselektroden herstellen. Es lassen sich entsprechend auch elektrochemische Schichten für Reaktoren, Reformer oder Batterien herstellen. Es lassen sich auch allgemeine Oberflächen mit Pulver beschichten, beispielsweise lassen sich Pulverlackierungen von Oberflächen durchführen.

Es lassen sich dabei eine Vielzahl von Pulverarten einsetzen und je nach eingesetzten Pulver lassen sich über die erfindungsgemäße Pulverfördervorrichtung 10 die optimalen Betriebsparameter einstellen.

## Patentansprüche

1. Pulverfördervorrichtung mit einem Aufnahmebehälter (12) für Pulver, welcher einen Abfuhranschluß (46) zur Abfuhr von Pulver aus dem Aufnahmebehälter (12) in einem Gasstrom aufweist, und mit einer Gasstrom-Einkopplungsvorrichtung (620) für den Aufnahmebehälter (12), durch welche ein erster Gasstrom (32) in den Aufnahmebehälter (12) einkoppelbar ist, durch den eine Pulverwolke (62) in dem Aufnahmebehälter (12) bildbar ist, und wobei ein zweiter Gasstrom (40) in den Aufnahmebehälter (12) zur Zerstäubung der Pulverwolke (62) einkoppelbar ist, und wobei über den Abfuhranschluß (46) mittels eines Schöpfrohres (48) Pulver aus der Pulverwolke (62) abführbar, **dadurch gekennzeichnet, daß** die Position einer Eintrittsöffnung (50) des Schöpfrohrs (48) im Aufnahmebehälter (12) einstellbar ist.

2. Pulverfördervorrichtung nach Anspruch 1, **dadurch gekennzeichnet, daß** der erste Gasstrom (32) in den Aufnahmebehälter (12) im wesentlichen entgegen der Schwerkraftrichtung eingeleitet ist.

3. Pulverfördervorrichtung nach Anspruch 1 oder 2, **dadurch gekennzeichnet, daß** zur Einleitung des ersten Gasstromes (32) ein Gasstrom durch eine Pulverbarriere (28) geführt ist, welche Gasstrom-durchlässig aber undurchlässig für Pulverpartikel ist.

4. Pulverfördervorrichtung nach Anspruch 3, **dadurch gekennzeichnet, daß** die Pulverbarriere durch eine Sinterplatte (28) gebildet ist.

5. Pulverfördervorrichtung nach Anspruch 3 oder 4, **dadurch gekennzeichnet, daß** die Pulverbarriere (28) eine bezogen auf die Schwerkraftrichtung untere Begrenzung eines Aufnahmeraums (14) des Aufnahmebehälters (12) bildet.

6. Pulverfördervorrichtung nach einem der vorangehenden Ansprüche, **dadurch gekennzeichnet, daß** der zweite Gasstrom (40) in den Aufnahmebehälter (12) bezogen auf die Schwerkraftrichtung oberhalb des ersten Gasstroms (32) eingekoppelt ist.

7. Pulverfördervorrichtung nach Anspruch 6, **dadurch gekennzeichnet, daß** der zweite Gasstrom (40) in den Aufnahmebehälter (12) im wesentlichen in Gegenströmung zum ersten Gasstrom (32) eingekoppelt ist.

8. Pulverfördervorrichtung nach einem der vorangehenden Ansprüche, **dadurch gekennzeichnet, daß** der zweite Gasstrom (40) über ein Rohr (38) eingekoppelt ist, welches mit einer oder mehreren Öffnungen (42, 44) versehen ist.

9. Pulverfördervorrichtung nach Anspruch 8, **dadurch gekennzeichnet, daß** die Öffnung oder Öffnungen (42, 44) bezogen auf eine Achse des Aufnahmebehälters (12) im wesentlichen symmetrisch angeordnet sind.

10. Pulverfördervorrichtung nach Anspruch 8 oder 9, **dadurch gekennzeichnet, daß** die Öffnung oder Öffnungen (42, 44) bezogen auf die Schwerkraftrichtung nach unten gerichtet sind.

11. Pulverfördervorrichtung nach einem der vorangehenden Ansprüche, **dadurch gekennzeichnet, daß** eine Eintrittsöffnung (50) des Schöpfrohrs (48) bezogen auf die Schwerkraftrichtung oberhalb der Einkopplung des zweiten Gasstroms (40) positioniert ist.

12. Pulverfördervorrichtung nach Anspruch 11, **dadurch gekennzeichnet, daß** der Durchmesser der Eintrittsöffnung (50) variierbar ist.

13. Pulverfördervorrichtung nach einem der vorangehenden Ansprüche, **dadurch gekennzeichnet, daß** die Position der Eintrittsöffnung (50) in vertikaler Richtung bezogen auf die Schwerkraftrichtung einstellbar ist.

14. Pulverfördervorrichtung nach einem der Ansprüche 11 bis 13, **dadurch gekennzeichnet, daß** die Eintrittsöffnung (50) im Aufnahmebehälter (12) so positioniert ist, daß sie im wesentlichen bei einer Achse des Aufnahmebehälters (12) angeordnet ist.

15. Pulverfördervorrichtung nach einem der vorangehenden Ansprüche, **dadurch gekennzeichnet, daß** der Aufnahmebehälter (12) einen kreisförmigen Querschnitt aufweist.

16. Pulverfördervorrichtung nach einem der vorangehenden Ansprüche, **dadurch gekennzeichnet, daß** der Volumenstrom des ersten Gasstroms (32) einstellbar ist.

17. Pulverfördervorrichtung nach einem der vorangehenden Ansprüche, **dadurch gekennzeichnet, daß** der Volumenstrom des zweiten Gasstroms (40) einstellbar ist.

18. Pulverfördervorrichtung nach einem der vorangehenden Ansprüche, **dadurch gekennzeichnet, daß** das Verhältnis der Volumenströme des ersten Gasstroms (32) und des zweiten Gasstroms (40) einstellbar ist.

19. Pulverfördervorrichtung nach einem der vorangehenden Ansprüche, **dadurch gekennzeichnet, daß** an das Schöpfrohr (48) eine Düse (50) angeschlossen ist.

20. Pulverfördervorrichtung nach einem der vorangehenden Ansprüche, **dadurch gekennzeichnet, daß** der Aufnahmebehälter (12) homogenisiertes Pulver aufnimmt.

21. Pulverfördervorrichtung nach einem der vorangehenden Ansprüche, **dadurch gekennzeichnet, daß** dem Aufnahmebehälter (12) Pulver (20) von einem Pulvervorrat (18) zugeführt wird.

22. Verwendung der Pulverfördervorrichtung nach einem der vorangehenden Ansprüche als Pulveraufbringungsvorrichtung auf einen Träger.

23. Verwendung nach Anspruch 22, **dadurch gekennzeichnet, daß** das Schöpfrohr an eine Flachdüse angeschlossen ist.

24. Verfahren zur Pulverauftragung auf einen Träger, bei dem homogenisiertes Pulver einer Pulverfördervorrichtung zugeführt wird, aus welcher Pulver über einen Gasstrom mittels eines Schöpfrohrs ausgetragen wird, wobei in der Pulverfördervorrichtung über einen ersten Gasstrom eine schwebende Pulverwolke gebildet wird, über einen zweiten Gasstrom die Pulverwolke zerstäubt wird und wobei eine Eintrittsöffnung des Schöpfrohres, deren Position einstellbar ist, in die zerstäubte Pulverwolke zur Pulveraustragung gerichtet wird.

25. Verfahren nach Anspruch 24, **dadurch gekennzeichnet, daß** der erste Gasstrom im wesentlichen entgegen der Schwerkraftrichtung gerichtet eingekoppelt wird.

26. Verfahren nach Anspruch 25, **dadurch gekennzeichnet, daß** der zweite Gasstrom im wesentlichen dem ersten Gasstrom entgegengerichtet eingekoppelt wird.

27. Verfahren nach einem der Ansprüche 24 bis 26, **dadurch gekennzeichnet, daß** die Position der Eintrittsöffnung des Schöpfrohres, der Durchmesser der Eintrittsöffnung, der erste Gasstrom und der zweite Gasstrom in Abhängigkeit von dem Pulver eingestellt werden.

28. Verfahren nach einem der Ansprüche 24 bis 27, **dadurch gekennzeichnet, daß** eine Eintrittsöffnung des Schöpfrohres bezogen auf die Gravitationsrichtung oberhalb einer Einkopplung des zweiten Gasstroms positioniert wird.

## Claims

1. Apparatus for conveying powder comprising a receptacle (12) for powder having a discharge connection (46) for discharging powder from the receptacle (12) in a flow of gas, and comprising a gas flow feed-in device (620) for the receptacle (12) for feeding into the receptacle (12) a first flow of gas (32) for forming a cloud of powder (62) in the receptacle (12), a second flow of gas (40) being feedable into the receptacle (12) for atomizing the cloud of powder (62), and powder being dischargeable from the cloud of powder (62) by means of a scoop pipe (48) via the discharge connection (46),
**characterized in that** the position of an inlet opening (50) of the scoop pipe (48) in the receptacle (12) is adjustable.

2. Apparatus for conveying powder in accordance with claim 1,
**characterized in that** the first flow of gas (32) is introduced into the receptacle (12) in a direction essentially opposite to the direction of gravity.

3. Apparatus for conveying powder in accordance with claim 1 or 2,
**characterized in that** in order to feed in the first flow of gas (32), a flow of gas is passed through a powder barrier (28) which is permeable to a flow of gas but impermeable to powder particles.

4. Apparatus for conveying powder in accordance with claim 3,
**characterized in that** the powder barrier is formed by a sinter plate (28).

5. Apparatus for conveying powder in accordance with claim 3 or 4,
**characterized in that** the powder barrier (28) forms a bottom, in relation to the direction of gravity, delimitation of a receiving space (14) of the receptacle (12).

6. Apparatus for conveying powder in accordance with any one of the preceding claims, **characterized in that** the second flow of gas (40) is fed into the receptacle (12) above, in relation to the direction of gravity, the first flow of gas (32).

7. Apparatus for conveying powder in accordance with claim 6,
**characterized in that** the second flow of gas (40) is fed into the receptacle (12) essentially in counterflow relation to the first flow of gas (32).

8. Apparatus for conveying powder in accordance with any one of the preceding claims, **characterized in that** the second flow of gas (40) is fed in through a pipe (38) having one or more openings (42, 44).

9. Apparatus for conveying powder in accordance with claim 8,
**characterized in that** the opening or openings (42, 44) are arranged essentially symmetrically in relation to an axis of the receptacle (12).

10. Apparatus for conveying powder in accordance with claim 8 or 9,
**characterized in that** the opening or openings (42, 44) are directed downwardly in relation to the direction of gravity.

11. Apparatus for conveying powder in accordance with any one of the preceding claims, **characterized in that** an inlet opening (50) of the scoop pipe (48) is positioned above, in relation to the direction of gravity, the feed-in of the second flow of gas (40).

12. Apparatus for conveying powder in accordance with claim 11,
**characterized in that** the diameter of the inlet opening (50) is variable.

13. Apparatus for conveying powder in accordance with any one of the preceding claims, **characterized in that** the position of the inlet opening (50) is adjustable in vertical direction in relation to the direction of gravity.

14. Apparatus for conveying powder in accordance with any one of claims 11 to 13, **characterized in that** the inlet opening (50) in the receptacle (12) is so positioned that it is arranged essentially at an axis of the receptacle (12).

15. Apparatus for conveying powder in accordance with any one of the preceding claims, **characterized in that** the receptacle (12) has a circular cross section.

16. Apparatus for conveying powder in accordance with any one of the preceding claims, **characterized in that** the volumetric flow rate of the first flow of gas (32) is adjustable.

17. Apparatus for conveying powder in accordance with any one of the preceding claims, **characterized in that** the volumetric flow rate of the second flow of gas (40) is adjustable.

18. Apparatus for conveying powder in accordance with any one of the preceding claims, **characterized in that** the ratio of the volumetric flow rates of the first flow of gas (32) and the second flow of gas (40) is adjustable.

19. Apparatus for conveying powder in accordance with any one of the preceding claims, **characterized in that** a nozzle (50) is connected to the scoop pipe (48).

20. Apparatus for conveying powder in accordance with any one of the preceding claims, **characterized in that** the receptacle (12) receives homogenized powder.

21. Apparatus for conveying powder in accordance with any one of the preceding claims, **characterized in that** powder (20) is fed to the receptacle (12) from a powder reservoir (18).

22. Use of the apparatus for conveying powder in accordance with any one of the preceding claims as apparatus for applying powder to a substrate.

23. Use in accordance with claim 22, **characterized in that** the scoop pipe is connected to a flat nozzle.

24. Method for applying powder to a substrate, wherein homogenized powder is fed to an apparatus for conveying powder, from which powder is discharged via a flow of gas by means of a scoop pipe, wherein a cloud of suspended powder is formed in the apparatus for conveying powder using a first flow of gas, and the cloud of powder is atomized using a second flow of gas, and wherein an inlet opening of the scoop pipe whose position is adjustable is directed into the atomized cloud of powder to discharge the powder.

25. Method in accordance with claim 24, **characterized in that** the first flow of gas is fed in and directed essentially opposite to the direction of gravity.

26. Method in accordance with claim 25, **characterized in that** the second flow of gas is fed in and directed essentially opposite to the first flow of gas.

27. Method in accordance with any one of claims 24 to 26, **characterized in that** the position of the inlet opening of the scoop pipe, the diameter of the inlet opening, the first flow of gas and the second flow of gas are adjusted in dependence upon the powder.

28. Method in accordance with any one of claims 24 to 27, **characterized in that** an inlet opening of the scoop pipe is positioned above, in relation to the direction of gravity, a feed-in of the second flow of gas.

## Revendications

1. Dispositif de transport de poudre avec un réceptacle (12) pour la poudre, qui comprend un raccordement d'évacuation (46) pour l'évacuation de la poudre hors du réceptacle (12) dans un flux de gaz, et avec un dispositif d'injection de flux de gaz (620) pour le réceptacle (12), grâce auquel un premier flux de gaz (32) peut être injecté dans le réceptacle (12), grâce auquel un nuage de poudre (62) peut être formé dans le réceptacle (12), et un second flux de gaz (40) pouvant être injecté dans le réceptacle (12) pour la pulvérisation du nuage de poudre (62), et la poudre pouvant être évacuée par le raccordement d'évacuation (46) au moyen d'un tube plongeur (48) hors du nuage de poudre (62), **caractérisé en ce** la position d'une ouverture d'entrée (50) du tube plongeur (48) dans le réceptacle (12) est réglable.

2. Dispositif de transport de poudre selon la revendication 1, **caractérisé en ce que** le premier flux de gaz (32) est introduit dans le réceptacle (12) essentiellement dans le sens inverse de la force de gravité.

3. Dispositif de transport de poudre selon la revendication 1 ou 2, **caractérisé en ce que** pour l'introduction du premier flux de gaz (32), un flux de gaz est guidé par une barrière de poudre (28) qui est perméable au flux de gaz mais imperméable aux particules de poudre.

4. Dispositif de transport de poudre selon la revendication 3, **caractérisé en ce que** la barrière de poudre est formée par une plaque frittée (28).

5. Dispositif de transport de poudre selon la revendication 3 ou 4, **caractérisé en ce que** la barrière de poudre (28) forme une limitation inférieure par rapport au sens de la force de gravité d'un espace récepteur (14) du réceptacle (12).

6. Dispositif de transport de poudre selon l'une quelconque des revendications précédentes, **caractérisé en ce que** le second flux de gaz (40) est injecté dans le réceptacle (12) au-dessus du premier flux de gaz (32) par rapport au sens de la force de gravité.

7. Dispositif de transport de poudre selon la revendication 6, **caractérisé en ce que** le second flux de gaz (40) est injecté dans le réceptacle (12) essentiellement à contre-courant par rapport au premier flux de gaz (32).

8. Dispositif de transport de poudre selon l'une quelconque des revendications précédentes, **caractérisé en ce que** le second flux de gaz (40) est injecté par le biais d'un tube (38) qui est pourvu d'une ou de plusieurs ouvertures (42, 44).

9. Dispositif de transport de poudre selon la revendication 8, **caractérisé en ce que** l'ouverture ou les ouvertures (42, 44) sont disposées de manière essentiellement symétrique par rapport à un axe du réceptacle (12).

10. Dispositif de transport de poudre selon la revendication 8 ou 9, **caractérisé en ce que** l'ouverture ou les ouvertures (42, 44) sont dirigées vers le bas par rapport au sens de la force de gravité.

11. Dispositif de transport de poudre selon l'une quelconque des revendications précédentes, **caractérisé en ce qu'**une ouverture d'entrée (50) du tube plongeur (48) est positionnée au-dessus de l'injection du second flux de gaz (40) par rapport au sens de la force de gravité.

12. Dispositif de transport de poudre selon la revendication 11, **caractérisé en ce que** le diamètre de l'ouverture d'entrée (50) peut être varié.

13. Dispositif de transport de poudre selon l'une quelconque des revendications précédentes, **caractérisé en ce que** la position de l'ouverture d'entrée (50) peut être réglée dans le sens vertical par rapport au sens de la force de gravité.

14. Dispositif de transport de poudre selon l'une quelconque des revendications 11 à 13, **caractérisé en ce que** l'ouverture d'entrée (50) dans le réceptacle (12) est positionnée de sorte à être disposée essentiellement près d'un axe du réceptacle (12).

15. Dispositif de transport de poudre selon l'une quelconque des revendications précédentes, **caractérisé en ce que** le réceptacle (12) présente une section circulaire.

16. Dispositif de transport de poudre selon l'une quelconque des revendications précédentes, **caractérisé en ce que** le débit volumique du premier flux de gaz (32) peut être réglé.

17. Dispositif de transport de poudre selon l'une quelconque des revendications précédentes, **caractérisé en ce que** le débit volumique du second flux de gaz (40) peut être réglé.

18. Dispositif de transport de poudre selon l'une quelconque des revendications précédentes, **caractérisé en ce que** le rapport des débits volumiques du premier flux de gaz (32) et du second flux de gaz (40) peut être réglé.

19. Dispositif de transport de poudre selon l'une quelconque des revendications précédentes, **caractérisé en ce qu'**une buse (50) est raccordée au tube plongeur (48).

20. Dispositif de transport de poudre selon l'une quelconque des revendications précédentes, **caractérisé en ce que** le réceptacle (12) reçoit de la poudre homogénéisée.

21. Dispositif de transport de poudre selon l'une quelconque des revendications précédentes, **caractérisé en ce que** la poudre (20) est amenée d'une réserve de poudre (18) au réceptacle (12).

22. Utilisation du dispositif de transport de poudre selon l'une quelconque des revendications précédentes comme dispositif d'application de poudre sur un support.

23. Utilisation selon la revendication 22, **caractérisée en ce que** le tube plongeur est raccordé à une buse plate.

24. Procédé d'application de poudre sur un support, pour lequel la poudre homogénéisée est amenée à un dispositif de transport de poudre, duquel la poudre est déversée via un flux de gaz au moyen du tube plongeur, dans le dispositif de transport de poudre étant formé un nuage de poudre en suspension via un premier flux de gaz, le nuage de poudre étant vaporisé via un second flux de gaz et une ouverture d'entrée du tube plongeur, dont la position peut être réglée, étant tournée dans le nuage de poudre vaporisé vers le déversement de la poudre.

25. Procédé selon la revendication 24, **caractérisé en ce que** le premier flux de gaz est injecté essentiellement dirigé dans le sens inverse de la force de gravité.

26. Procédé selon la revendication 25, **caractérisé en ce que** le second flux de gaz est injecté essentiellement dirigé dans le sens inverse du premier flux du gaz.

27. Procédé selon l'une quelconque des revendications 24 à 26, **caractérisé en ce que** la position de l'ouverture d'entrée du tube plongeur, le diamètre de l'ouverture d'entrée, le premier flux de gaz et le second flux de gaz sont réglés en fonction de la poudre.

28. Procédé selon l'une quelconque des revendications 24 à 27, **caractérisé en ce qu'**une ouverture d'entrée du tube plongeur est positionnée au-dessus d'une injection du second flux de gaz par rapport au sens de la gravitation.
